**Europäisches Patentamt**

**European Patent Office**

**Office européen des brevets**

(11) Numéro de publication: **0 191 703**
**B1**

(12) **FASCICULE DE BREVET EUROPEEN**

(45) Date de publication du fascicule du brevet:
26.10.88

(51) Int. Cl.⁴: **F 16 F 13/00, B 60 K 5/12**

(21) Numéro de dépôt: **86400319.9**

(22) Date de dépôt: **14.02.86**

(54) Perfectionnements aux supports antivibratoires hydrauliques.

(30) Priorité: **15.02.85 FR 8502217**

(43) Date de publication de la demande:
**20.08.86 Bulletin 86/34**

(45) Mention de la délivrance du brevet:
**26.10.88 Bulletin 88/43**

(84) Etats contractants désignés:
**AT BE CH DE GB IT LI NL SE**

(56) Documents cités:
**EP - A - 0 098 128**
**EP - A - 0 149 081**
**DE - A - 3 239 787**
**DE - B - 1 206 214**
**DE - U - 8 119 912**
**GB - A - 2 041 485**
**US - A - 2 380 899**

(73) Titulaire: **HUTCHINSON, 2 rue Balzac, F-75008 Paris (FR)**

(72) Inventeur: **Jouade, Pierre, 21 rue du Mont Barry La Fringale, La Chapelle Du Noyer F-28200 Chateaudun (FR)**

(74) Mandataire: **Behaghel, Pierre et al, CABINET PLASSERAUD 84 rue d'Amsterdam, F-75009 Paris (FR)**

ACTORUM AG

**Description**

L'invention concerne les dispositifs antivibratoires destinés à être interposés aux fins de support et d'amortissement entre deux éléments rigides individuellement soumis à certaines oscillations et/ou vibrations, l'amortissement faisant intervenir le refoulement d'un liquide à travers un passage étranglé.

A titre d'exemple non limitatif, on indique que de tels supports peuvent être montés entre un châssis de véhicule et le moteur de ce véhicule en vue d'amortir aussi bien les oscillations imposées au châssis par les irrégularités et variations de déclivité du sol lors de la circulation du véhicule sur ce sol que les vibrations dues au fonctionnement du moteur.

L'invention concerne plus particulièrement, parmi les supports du genre en question, ceux qui sont constitués par un boîtier étanche interposé entre les deux éléments rigides, boîtier comportant une cuvette rigide solidarisable avec l'un des deux éléments rigides, une cloche rigide solidarisable avec l'autre élément rigide, cette cloche étant plus petite que la cuvette et plongeant dans celle-ci, un anneau élastique épais de support reliant la cuvette à la cloche, une membrane flexible disposée à l'intérieur de la cloche et raccordée de manière étanche au bord de cette cloche, une cloison étanche portée par ledit bord et divisant l'intérieur du boîtier en deux chambres, savoir une chambre de travail extérieure à la cloche et délimitée par la cuvette, l'anneau, la cloche et la cloison, et une chambre de compensation intérieure à la cloche et délimitée par la membrane et la cloison, ces deux chambres communiquant entre elles en permanence par un passage étranglé, lequel est de préférence constitué par un trou évidé dans la cloison, et une masse liquide remplissant les deux chambres ainsi que le passage étranglé.

Avec un tel support, connu par exemple du document EP-A-98128, les oscillations ou vibrations créées entre les deux éléments rigides ont pour effet de rapprocher et d'écarter axialement à tour de rôle ces deux éléments l'un de l'autre et de refouler le liquide de l'une des deux chambres dans l'autre à travers le passage étranglé et inversement, ce qui assure l'amortissement hydraulique de ce liquide par son étranglement dans ce passage.

Avec les modes de réalisation actuels des supports du genre en question, la résistance éventuelle à l'arrachement axial de la cloche hors de la cuvette et aux débattements relatifs transversaux entre ces deux pièces est prise en charge exclusivement par l'anneau élastique.

Il peut donc arriver que certaines sollicitations anormalement élevées exercées sur la masse supportée (moteur ou autre), telles que celles dues à des décélérations brusques, se traduisent par des déformations excessives dudit anneau pouvant entraîner sa rupture et engendrer des chocs générateurs de dommages entre ladite masse supportée et son habitacle.

L'invention a pour but, surtout, de remédier à un tel inconvénient en limitant par butée les déformations en question.

A cet effet les supports du genre ci-dessus sont essentiellement caractérisés, selon l'invention, en ce que le bord de la cuvette est prolongé par un rebord rigide rentrant à l'intérieur de cette cuvette et en ce que le bord de la cloche est lui-même terminé par un bourrelet extérieur de dimensions telles qu'il ne puisse pas passer à travers l'ouverture délimitée par le susdit rebord.

Dans des modes de réalisation préférés, on a recours en outre à l'une et/ou à l'autre des dispositions suivantes:

— le support est de révolution autour d'un axe et le diamètre extérieur du bourrelet est supérieur au diamètre intérieur du rebord rentrant,

— le bourrelet est constitué au moins extérieurement par un sabot en caoutchouc ou analogue,

— le sabot ci-dessus délimite avec la paroi de cuvette qui l'entoure au moins un passage annulaire étranglé,

— l'anneau épais présente une forme générale tronconique, le rebord rentrant est constitué par une rondelle métallique de forme générale tronconique rentrant dans la cuvette et rapportée sur cette dernière, notamment par sertissage, et la grande base de l'anneau épais est adhérée sur cette rondelle,

— l'anneau épais présente une forme générale tronconique, le sommet de la cloche est rapporté sur la base d'un plot cylindrique rigide et la petite base de l'anneau est adhérée contre la paroi latérale de ce plot.

L'invention comprend, mises à part ces dispositions principales, certaines autres dispositions qui s'utilisent de préférence en même temps et dont il sera plus explicitement question ci-après.

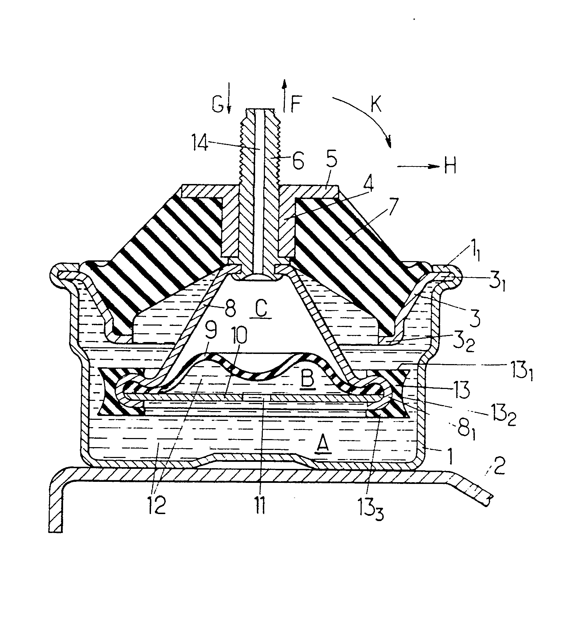

Dans ce qui suit, l'on va décrire un mode de réalisation préféré de l'invention en se référant au dessin ci-annexé d'une manière bien entendu non limitative.

La figure unique, de ce dessin, montre en coupe axiale un support antivibratoire établi conformément à l'invention.

Ledit support est destiné à être interposé verticalement entre un organe porteur rigide constitué par un châssis de véhicule et un organe supporté rigide constitué par un moteur à combustion interne.

Les termes «haut, bas, supérieur, inférieur, cuvette, cloche», utilisés dans la description qui suit le sont à titre d'exemple non limitatif car le support décrit peut parfaitement être utilisé à l'envers du sens adopté pour cette description.

Le support considéré se présente sous la forme générale d'un boîtier étanche comportant:

— une cuvette inférieure rigide 1 solidarisée, notamment par soudure, avec une patte 2 facile à monter sur le châssis du véhicule,

— une rondelle métallique rigide 3 de forme générale tronconique plongeant à l'intérieur de la cuvette 1 à partir de son bord périphérique supérieur $3_1$, lequel est fixé par sertissage sur le bord supérieur $1_1$ de cette cuvette,

– un plot cylindrique rigide 4 prolongé radialement à son extrémité supérieure par un disque de support 5, l'ensemble de ces deux éléments 4 et 5 étant traversé par la portion inférieure d'un goujon fileté 6 dont la portion supérieure, en attente, sert à la fixation du moteur à supporter,

– un anneau élastique 7 suffisamment épais pour transmettre les charges de l'organe porté à l'organe porteur sans s'affaisser, anneau qui est délimité par deux surfaces tronconiques évasées vers le bas et dont la petite base supérieure est adhérée à la fois contre la face latérale cylindrique du plot 4 et contre la face plane inférieure du disque 5, sa grande base inférieure étant adhérée contre la rondelle 3,

– une cloche 8 délimitée par une jupe tronconique évasée vers le bas, cloche dont le sommet est fixé par sertissage sur l'extrémité inférieure du goujon 6,

– un soufflet 9 étanche et flexible, notamment élastiquement, disposé à l'intérieur de la cloche 8 et dont le pourtour est fixé de façon étanche contre le bord de cette cloche,

– et une cloison 10 fermant ladite cloche et dont le pourtour est également fixé de façon étanche sur le bord de cette cloche, ladite cloison divisant l'intérieur du boîtier en deux chambres, savoir une chambre de travail A extérieure à la cloche et une chambre de compensation B intérieure à celle-ci.

Un passage étranglé 11 fait communiquer en permanence les deux chambres A et B entre elles et une masse liquide 12 remplit ces deux chambres A et B ainsi que ce passage 11.

Dans le mode de réalisation illustré, le passage étranglé 11 est constitué par un trou évidé au centre de la cloison 10, laquelle est rigide.

Mais cette cloison 10 pourrait également être verticalement mobile ou déformable et alors associée à des moyens pour limiter ses débattements verticaux, moyens tels que des butées extérieures ou qu'une armature inextensible interne.

Quant au passage étranglé 11, il pourrait également être constitué par un canal relativement long s'étendant par exemple selon un arc de cercle à l'intérieur d'un corps annulaire formant la base de la cloche 8 et dont les deux extrémités déboucheraient respectivement dans les deux chambres A et B.

Les fixations étanches du soufflet 9 et de la cloison 10 sur la cloche 8 sont avantageusement assurées par sertissage, le bord inférieur $8_1$ de la cloche s'étendant d'abord radialement vers l'extérieur avant d'être rabattu vers le bas et vers l'intérieur de façon à envelopper et à enserrer les bords superposés de ces deux éléments.

Le bourrelet annulaire formé par le bord $8_1$ ainsi rabattu est lui-même revêtu jointivement par une garniture annulaire 13 en caoutchouc ou autre matériau élastique.

Cette garniture 13 est évidée par une gorge annulaire présentant en section droite la forme d'un U ouvert vers l'axe du support et recouvre ainsi non seulement la face extérieure du bourrelet $8_1$, mais aussi sa face supérieure et sa face inférieure: elle constitue ainsi un «sabot» annulaire pour le bourrelet $8_1$, sabot propre à encaisser les contacts établis entre ce bourrelet $8_1$ et les portées en regard, et ce dans toutes les directions, comme il sera précisé plus loin.

Comme visible sur le dessin, la face $13_1$ de ce sabot se trouve au-dessous du bord inférieur $3_2$ de la rondelle 3, lequel bord est rabattu horizontalement vers l'axe du support de façon à constituer une portée de contact de surface suffisante pour ladite face 13.

La face extérieure $13_2$ du sabot 13 est disposée radialement en regard de la paroi cylindrique de la cuvette 1, à une petite distance de cette paroi.

L'espace annulaire réservé entre ces deux portées en regard peut constituer au moins un étranglement pour le passage du liquide circulant entre les deux portions haute et basse de la chambre A.

Il peut être avantageux de régler les dimensions de cet étranglement en fonction des besoins de l'amortissement: c'est ainsi que, dans le mode de réalisation illustré, la demi-section axiale du sabot 13 présente extérieurement deux cornes qui définissent deux tels étranglements en série.

Bien que ce ne soit pas indispensable, la chambre C qui se trouve à l'intérieur de la cloche 8 au-dessus du soufflet 9, chambre qui est normalement pleine d'air, est avantageusement mise à l'air libre à travers un conduit 14 évidé axialement dans le goujon 6.

L'ensemble des pièces ci-dessus décrites – à l'exception de la patte 2 – sont de préférence de révolution autour d'un axe, dit «axe de support». Mais des formes générales planes autres que circulaires pourraient également être envisagées, par exemple une forme ovale ou carrée.

Le fonctionnement du support décrit ci-dessus est le suivant.

Lors des déplacements relatifs entre d'une part l'ensemble porteur constitué par le châssis et les éléments (1, 2) qui en sont solidaires et d'autre part l'ensemble porté constitué par le moteur et les éléments (4–6) qui en sont solidaires, le premier ensemble se rapproche et s'écarte périodiquement du second selon la verticale.

Lors de chaque rapprochement mutuel, une fraction du liquide contenu dans la chambre A est refoulée, par déformation de l'anneau 7, vers la chambre B à travers le passage 11, ce qui gonfle le soufflet 9 vers le haut; c'est l'inverse lors des écartements mutuels consécutifs.

Dans le cas d'une sollicitation anormalement élevée du moteur vers le haut (selon la flèche F) l'anneau 7 se déforme en flexion et en traction jusqu'à butée axiale de la portée $13_1$ du sabot 13 contre le rebord $3_2$ de la rondelle.

Cette butée s'établit d'abord progressivement grâce à la compressibilité du sabot 13, puis elle interrompt totalement la déformation de l'anneau 7 et empêche sa rupture ainsi que la destruction du support.

Dans le cas au contraire d'une forte sollicitation du moteur vers le bas (selon la flèche G), l'anneau 7 commence par se déformer par flexion et compression jusqu'à la butée axiale de la base $13_3$ du sabot 13 contre le fond de la cuvette 1: la déformation en question ne peut plus être poursuivie au-delà de cette butée.

Enfin, dans le cas d'une sollicitation latérale horizontale (selon la flèche H) ou de basculement (selon la flèche K) c'est la tranche périphérique $13_2$ du sabot 13 qui vient buter progressivement contre la portion transversalement en regard de la paroi cylindrique de la cuvette 1, puis interdire toute déformation ultérieure de l'anneau 7 et donc son arrachement ou sa rupture.

Ainsi, dans tous les cas où une sollicitation anormalement élevée est exercée sur le moteur supporté, par exemple dans le cas d'une décélération brusque du véhicule, on observe une interruption d'abord progressive et finalement extrêmement ferme et sûre des déformations du support interdisant sa destruction.

En suite de quoi, et quel que soit le mode de réalisation adopté, on dispose finalement d'un support dont la constitution et le fonctionnement résultent suffisamment de ce qui précède.

Ce support présente sur ceux antérieurement connus l'important avantage d'assurer un ancrage très solide de la première pièce rigide sur la seconde, c'est-à-dire, dans l'application citée à titre d'exemple, du moteur sur le châssis du véhicule, vu la limitation par butée élastique qui est imposée, dans un tel support, aux déformations de celui-ci lors de l'exercice de sollicitations anormalement élevées sur la masse supportée.

Comme il va de soi, et comme il résulte d'ailleurs déjà de ce qui précède, l'invention ne se limite nullement à ceux de ses modes d'application et de réalisation qui ont été plus spécialement envisagés; elle en embrasse, au contraire, toutes les variantes, notamment:

— celles où les coussins de caoutchouc ou autre matière élastique destinés à amortir les chocs entre le bourrelet $8_1$ formé à la base de la cloche 8 et les portées en regard seraient prévus sur certaines au moins de ces portées au lieu de l'être sur ce bourrelet, ou en supplément à ceux prévus sur ce bourrelet,

— celles où lesdits coussins, tout en demeurant de révolution autour de l'axe du support, auraient une épaisseur variable et non constante sur toute leur étendue de façon à obtenir des résistances à l'arrachement différentes selon les directions,

— celles où, pour la même raison, les distances entre les portées respectives de la cloche et de la cuvette destinées à venir en contact mutuel en cas de sollicitations extrêmes seraient variables autour de l'axe du support,

— celles où la jupe de la cloche 8, au lieu d'être tronconique, présenterait au moins en partie une forme cylindrique de façon que le volume de la chambre de compensation B, chambre délimitée par le soufflet 9 lui-même logé dans cette cloche, puisse être plus important.

**Revendications**

1. Dispositif antivibratoire destiné à être interposé aux fins de support et d'amortissement entre deux éléments rigides, constitué par un boîtier étanche interposé entre les deux éléments rigides, boîtier comportant une cuvette rigide (1) solidarisable avec l'un des deux éléments rigides, une cloche rigide (8) solidarisable avec l'autre élément rigide, cette cloche étant plus petite que la cuvette et plongeant dans celle-ci, un anneau élastique épais de support (7) reliant la cuvette à la cloche, une membrane flexible (9) disposée à l'intérieur de la cloche et raccordée de manière étanche au bord de cette cloche, une cloison étanche (10) portée par ledit bord et divisant l'intérieur du boîtier en deux chambres, savoir une chambre de travail (A) extérieure à la cloche et délimitée par la cuvette, l'anneau, la cloche et la cloison, et une chambre de compensation (B) intérieure à la cloche et délimitée par la membrane et la cloison, ces deux chambres communiquant entre elles en permanence par un passage étranglé (11), et une masse liquide (12) remplissant les deux chambres ainsi que le passage étranglé, caractérisé en ce que le bord de la cuvette (1) est prolongé par un rebord rigide (3) rentrant à l'intérieur de cette cuvette et en ce que le bord de la cloche (8) est lui-même terminé par un bourrelet extérieur $(8_1)$ de dimensions telles qu'il ne puisse pas passer à travers l'ouverture délimitée par le susdit rebord (3).

2. Dispositif antivibratoire selon la revendication 1, de révolution autour d'un axe, caractérisé en ce que le diamètre extérieur du bourrelet $(8_1)$ est supérieur au diamètre intérieur du rebord rentrant (3).

3. Dispositif antivibratoire selon l'une quelconque des revendications 1 et 2, caractérisé en ce que le bourrelet $(8_1)$ est recouvert par un sabot de caoutchouc ou analogue (13).

4. Dispositif antivibratoire selon la revendication 3, caractérisé en ce que le sabot (13) délimite avec la paroi de cuvette qui l'entoure au moins un passage annulaire étranglé.

5. Support antivibratoire selon l'une quelconque des précédentes revendications, pour lequel l'anneau épais (7) présente une forme générale tronconique, caractérisé en ce que le rebord rentrant (3) est constitué par une rondelle métallique de forme générale tronconique rentrant dans la cuvette (4) et rapportée sur cette dernière, et en ce que la grande base de l'anneau épais (7) est adhérée sur cette rondelle (3).

6. Support antivibratoire selon l'une quelconque des précédentes revendications, pour lequel l'anneau épais (7) présente une forme générale tronconique, caractérisé en ce que le sommet de la cloche (8) est rapporté sur la base d'un plot cylindrique rigide (4) et en ce que la petite base de l'anneau épais (7) est adhérée contre la paroi latérale de ce plot (4).

**Patentansprüche**

1. Antischwingvorrichtung, die zwischen zwei starre Elemente zwecks Abstützung und Dämpfung einschaltbar ist, bestehend aus einem zwischen den beiden starren Elementen angeordneten dichten Gehäuse, das eine mit einem der beiden starren Elemente verbindbare starre Schale (1), eine mit dem anderen starren Element verbindbare starre Glocke (8), die kleiner als die Schale ist und in diese eintaucht, einen die Schale mit der Glocke verbindenden elastischen dicken Stützring (7), eine im Inneren der Glocke angeordnete und mit dem Rand der Glocke abdichtend verbundene flexible Membrane (9), eine dichte Trennwand (10), die vom Rand getragen ist und das Innere des Gehäuses in zwei Kammern unterteilt, nämlich eine ausserhalb der Glocke befindliche, von der Schale, dem Ring, der Glocke und der Trennwand begrenzte Arbeitskammer (A) und eine innerhalb der Glocke befindliche, von der Membrane und der Trennwand begrenzte Kompensationskammer (B) wobei die beiden Kammern miteinander ständig über einen Drosseldurchgang (11) in Verbindung stehen, und eine flüssige Masse (12) aufweist, welche die beiden Kammern sowie den Drosseldurchgang füllt, dadurch gekennzeichnet, dass der Rand der Schale (1) durch einen starren Ansatz (3) verlängert ist, der in das Innere der Schale vorragt und dass der Rand der Glocke (8) seinerseits in einem Aussenwulst ($8_1$) endet, dessen Abmessungen so gewählt sind, dass er die vom Ansatz (3) begrenzte Öffnung nicht durchsetzen kann.

2. Antischwingvorrichtung nach Anspruch 1, die als Drehkörper ausgebildet ist, dadurch gekennzeichnet, dass der Aussendurchmesser des Wulstes ($8_1$) grösser als der Innendurchmesser des vorragenden Ansatzes (3) ist.

3. Antischwingvorrichtung nach Anspruch 1 oder 2, dadurch gekennzeichnet, dass der Wulst ($8_1$) von einem Schuh (13) aus Kautschuk od. dgl. bedeckt ist.

4. Antischwingvorrichtung nach Anspruch 3, dadurch gekennzeichnet, dass der Schuh (13) mit der Wand der Schale, die ihn umgibt, zumindest einen ringförmigen Drosseldurchgang begrenzt.

5. Antischwinglager nach einem der vorhergehenden Ansprüche, bei welchem der dicke Ring (7) eine allgemein kegelstumpfförmige Gestalt hat, dadurch gekennzeichnet, dass der vorragende Ansatz (3) von einer Metallscheibe von allgemein kegelstumpfförmiger Gestalt gebildet ist, welche in die Schale (4) vorragt und an diese angesetzt ist, und dass die grössere Basis des dicken Ringes (7) an der Scheibe (3) haftet.

6. Antischwinglager nach einem der vorhergehenden Ansprüche, bei welchem der dicke Ring (7) eine allgemein kegelstumpfförmige Gestalt hat, dadurch gekennzeichnet, dass der Scheitel der Glocke (8) an die Basis einer starren zylindrischen Muffe (4) angesetzt ist und dass die kleinere Basis des dicken Ringes (7) an der Seitenwand dieser Muffe (4) haftet.

## Claims

1. An antivibratory device intended to be fitted for support and damping purposes between two rigid elements, formed by a fluid tight case inserted between the two rigid elements, which case comprises a rigid bowl (1) securable to one of the two rigid elements, a rigid bell (8) securable to the other rigid element, this bell being smaller than the bowl and plunging therein, a thick resilient support ring (7) connecting the bowl to the bell, a flexible membrane (9) disposed inside the bell and joined sealingly to the edge of this bell, a fluid-tight dividing wall (10) carried by said edge and dividing the inside of the case into two chambers, namely, a work chamber (A) external to the bell and defined by the bowl, the ring, the bell and the dividing wall and a compensation chamber (B) inside the bell and defined by the membrane and the dividing wall, these two chambers communicating permanently with each other through a constricted passage (11), and a liquid mass (12) filling the two chambers as well as the constricted passage, characterized in that the edge of the bowl (1) is extended by a rigid flange (3) re-entrant inside this bowl and in that the edge of the bell (8) itself ends in an external bead portion ($8_1$) of dimensions such that it cannot pass through the opening defined by said flange (3).

2. The antivibratory device according to claim 1, of revolution about an axis, characterized in that the diameter of the bead portion ($8_1$) is greater than the inner diameter of the re-entrant flange (3).

3. The antivibratory device according to any one of the claims 1 and 2, characterized in that the bead portion ($8_1$) is covered by a rubber or similar shoe (13).

4. The antivibratory device according to claim 3, characterized in that the shoe (13) defines with the wall of the bowl which surrounds it at least one constricted annular passage.

5. The antivibratory support according to any one of the preceding claims, for which the thick ring (7) has a general truncated cone shape, characterized in that the re-entrant flange (3) is formed by a metal washer of general truncated cone shape re-entering into the bowl (4) and fixed thereto, and in that the large base of the thick ring (7) is adhered to this washer (3).

6. The antivibratory support according to any one of the preceding claims, for which the thick ring (7) has a general truncated cone shape, characterized in that the top of the bell (8) is fixed to the base of a rigid cylindrical stud (4) and in that the small base of the thick ring (7) is adhered to the side wall of this stud (4).

0191703

7